# EUROPÄISCHE PATENTSCHRIFT

(11) **EP 1 634 844 B1**
(45) Veröffentlichungstag und Bekanntmachung des Hinweises auf die Patenterteilung: **24.10.2007**
(21) Anmeldenummer: 05014405.4
(22) Anmeldetag: 02.07.2005
(51) Int. Cl.: B66C 1/18, A01G 17/12

(54) **Gurtbandvorrichtung**
Belt
Sangle

(30) Priorität: 14.09.2004 DE 102004044859
(43) Veröffentlichungstag der Anmeldung: 15.03.2006
(73) Patentinhaber: Drayer, Friedrich, 79286 Glottertal (DE)
(72) Erfinder: Drayer, Friedrich, 79286 Glottertal (DE)
(74) Vertreter: Wolf, Eckhard

(56) Entgegenhaltungen:
- WO-A-98/55341
- DE-U1- 8 531 209
- DE-U1- 20 314 422
- US-A- 3 463 534
- US-A- 3 466 080
- US-A- 4 578 941

## Beschreibung

Die Erfindung betrifft im Speziellen eine Gurtbandvorrichtung für unter Zugbelastung stehende Anordnungen, insbesondere für Baumkronensicherungssysteme, nach dem Oberbegriff des Anspruchs 1 und im Allgemeinen eine Zugvorrichtung mit Überlastanzeige nach dem Oberbegriff des Anspruchs 15.

Kronensicherungen für Bäume sollen dazu dienen, das Ausbrechen bzw. Herabstürzen von Kronenteilen zu verhindern und damit die Verkehrssicherheit herzustellen. Unter Berücksichtigung des allgemeinen Interesses an einer Erhaltung vorhandenen Baumbestandes ist im Einzelfall abzuwägen, ob die Sicherheit durch Entfernen von Baumteilen oder durch Kronensicherungsmaßnahmen erreicht werden kann, wobei letzteres vorzuziehen ist. Zur Sicherung werden unter anderem Gurtvorrichtungen verwendet, die beispielsweise aus separaten Gurten und Halteschlaufen bestehen. Die Schlaufen werden um die zu sichernden Baumteile gelegt und mit Seilen miteinander verbunden. Da die Sicherungsmaßnahme über mehrere Jahre bestehen kann, ist eine regelmäßige Überprüfung ihres Zustands erforderlich. Um eine möglicherweise vorgekommene Überlastung der Vorrichtung feststellen zu können, ist es bekannt, diese mit Kennfäden auszustatten, die eine geringere Belastungsgrenze als das Seilmaterial an sich aufweisen. Als nachteilig wird hierbei empfunden, dass eine Überprüfung nur aus unmittelbarer Nähe stattfinden kann, da gerissene Kennfäden nicht aus größeren Entfernungen, etwa vom Boden aus, mit der erforderlichen Sicherheit identifiziert werden können. Dies geht mit einem erheblichen Arbeitsaufwand einher.

Ausgehend hiervon besteht die Aufgabe der vorliegenden Erfindung darin, eine Vorrichtung der eingangs genannten Art bereitzustellen, die eine zuverlässige Beurteilung einer aufgetretenen Überschreitung einer vorbestimmten Zugkraft auf größere Entfernungen erlaubt.

Erfindungsgemäß wird diese Aufgabe durch eine Vorrichtung mit der Merkmalskombination der Ansprüche 1 und 15 gelöst. Vorteilhafte Weiterbildungen und Ausgestaltungen der Erfindung ergeben sich aus den abhängigen Ansprüchen.

Ausgehend von dem Gedanken, dass für eine gute Erkennbarkeit aus größeren Entfernungen ein hinreichend deutlich sichtbares Anzeigeelement erforderlich ist, wird gemäß der Erfindung vorgeschlagen, dass das Anzeigelement das Gurtband verkürzend übergreift und mit zwei Endbereichen derart an dem Gurtband befestigt ist, dass eine der Befestigungen bei einer vorbestimmten auf das Gurtband wirkenden Zugkraft nachgibt, die geringer ist als die Mindestzugkraft, der die Schlaufenbefestigung und das Gurtband widerstehen. Die eine Befestigung des Anzeigeelements wirkt somit als Sollbruchstelle, wobei durch die Gestaltung der Befestigungsweise, die vorzugsweise durch eine Naht realisiert ist, jeder gewünschte Auslösewert erzielt werden kann.

In bevorzugter Ausgestaltung der Erfindung ist das Gurtband zwischen den Schlaufen von einem insbesondere auch das Anzeigeelement in seinem beidendig befestigten Zustand überdeckenden, vorzugsweise undurchsichtigen Schutzschlauch lose umgeben. Der Schutzschlauch dient dabei einerseits als Scheuerschutz für den umschlungenen Baumteil, andererseits kann erreicht werden, dass das Anzeigeelement im nicht-ausgelösten Zustand vom Schutzschlauch überdeckt ist, während es im ausgelösten Zustand deutlich sichtbar aus dem entsprechenden Ende des Schutzschlauchs herausragt. Hierfür ist es zweckmäßig, wenn bei Überschreiten der vorbestimmten Zugkraft die schlaufenferne Befestigung des Anzeigeelements nachgibt.

Vorzugsweise ist der vom Anzeigeelement übergriffene Bereich des Gurtbands Z-förmig gefaltet, so dass sich die effektive Länge des Gurtbands beim Auslösen des Anzeigeelements vergrößert und das Anzeigeelement den Schutzschlauch nach einem Nachgeben seiner Befestigung durch eine Zugkraftüberschreitung zumindest teilweise überragt.

In bevorzugter Ausgestaltung der Erfindung besteht das Gurtband und/oder das Anzeigelement aus einem Kunststoffmaterial, vorzugsweise aus einem Polyester-, Polyamid- oder Polyethylengewebe besteht. Diese Materialen haben sich als hinreichend zugfest und elastisch erwiesen.

Eine deutliche Sichtbarkeit auch aus größeren Entfernungen ist insbesondere dann gegeben, wenn das Gurtband und das Anzeigeelement unterschiedliche Farben aufweisen, wobei das Anzeigeelement vorteilhaft eine Signalfarbe, insbesondere gelb, orange oder rot aufweist.

Die Befestigung der die Schlaufe bildenden Endpartie des Gurtbands ist vorzugweise durch eine Naht gebildet, kann jedoch auch durch Kunststoffschweißen, durch Kleben oder durch Nieten gebildet sein. Gleiches gilt für die Befestigung der Endbereiche des Anzeigeelements an dem Gurtband.

Praxisgerechte Werte für die Zugkraft, die zu einem Nachgeben der Befestigung des Endbereichs des Anzeigeelements an dem Gurtband führt, liegen im Bereich von 5 kN bis 100 kN.

Der erfindungsgemäße Grundgedanke ist auch anwendbar bei einer Zugvorrichtung mit Überlastanzeige, mit einem als Kette, Seil oder Gurtband ausgebildeten Zugorgan, an dessen Enden eine Zugkraft wirkt, und mit mindestens einem eine eine vorbestimmte Zugkraft überschreitende Zugkraft optisch signalisierenden Anzeigeelement. Eine derartige Zugvorrichtung kann beispielsweise bei Riggingsystemen (Hebe- und Ablassysteme für Lasten) oder bei Zugsystemen eingesetzt werden. Erfindungsgemäß ist dann das Zugorgan von einem zumindest das Anzeigeelement überdeckenden, undurchsichtigen Schlauchkörper umgeben und das Anzeigeelement übergreift das Zugorgan unter Bildung einer das Zugorgan verkürzenden Schlaufenpartie in Längsrichtung, wobei eine der Befestigungen des Anzeigeelements an dem Zugorgan bei einem Überschreiten der vorbestimmten Zugkraft nachgibt und zumindest ein Teil des Anzeigeelements von der Schlaufenpartie des Zugorgans aus der Überdeckung durch den Schlauchkörper herausgezogen wird.

Im Folgenden wird die Erfindung anhand eines in der Zeichnung schematisch dargestellten Ausführungsbeispiels näher erläutert. Es zeigen
- Fig. 1: eine schematische Querschnittsansicht einer Gurtbandvorrichtung mit einem beidendig befestigten Anzeigeelement; und
- Fig. 2: die Gurtbandvorrichtung gemäß Fig. 1 nach dem Nachgeben einer Befestigung des Anzeigeelements nach Erreichen einer vorbestimmten Zugbelastung.

Die in der Zeichnung dargestellte Gurtbandvorrichtung besteht im Wesentlichen aus einem Gurtband 10, dessen Enden umgelegt sind und Schlaufen 12, 12' bilden, indem die Endpartien des Bands mittels Nähten 14, 14' an von den Enden entfernt liegenden Partien des Gurtbands befestigt sind. Die Länge des vernähten Bereichs, das Nahtmaterial sowie das Nahtmuster sind mitbestimmend für die Belastbarkeit der Befestigungen. Die Gurtbandvorrichtung ist dazu bestimmt, um den zu sichernden oder den stützenden Baumteil gelegt zu werden. Die Schlaufen 12, 12' dienen zur Befestigung eines Seils oder dergleichen, das zwei der dargestellten Gurtbandvorrichtungen miteinander verbindet und so ein Lastaufnahmesystem bildet, bei dem ein schwacher oder geschädigter Baumteil von einem gesunden bzw. stärkeren Baumteil gestützt wird.

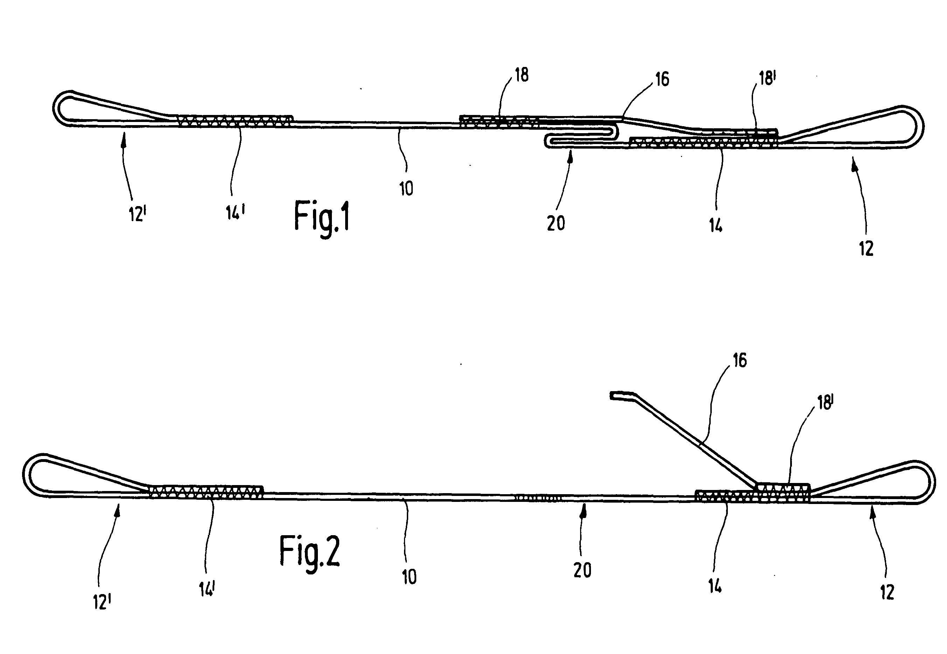

Im Bereich der Schlaufe 12 ist ein Anzeigeelement 16 angeordnet, das beispielsweise ebenfalls ein Stück Gurtband sein kann und das mit seinen Enden an dem Gurtband 10 befestigt ist. Letzteres erfolgt durch Nähte 18, 18', wobei die Belastbarkeit der Nähte 18, 18' unterschiedlich ist. Die Naht 18 ist als Sollbruchstelle ausgebildet, die bei einer vorbestimmten Belastung nachgibt, während die Naht 18' höheren Belastungen standhält. Wie Fig. 1 zeigt, ist der von dem Anzeigeelement 16 übergriffene Bereich 20 des Gurtbands 10 Z-förmig gefaltet, wodurch die freie Länge der Vorrichtung in diesem Zustand verkürzt wird. Die Gurtbandlänge des Bereichs 20 entspricht etwa der Länge des Anzeigeelements 16.

Die Vorrichtung ist im Bereich zwischen den Schlaufen 12, 12' von einem nicht näher dargestellten Schutzschlauch umschlossen, der als Scheuerschutz für den umschlungenen Baumteil dient und in dem in Fig. 1 dargestellten Zustand das Anzeigeelement 16 zumindest überwiegend abdeckt.

Fig. 2 stellt den Zustand der Vorrichtung nach einem Überschreiten der vorbestimmten Belastbarkeit der Befestigung 18 dar. Diese hat sich gelöst und der Bereich 20 des Gurtbands 10 hat sich durch die auf die Schlaufen 12, 12' wirkende Zugkraft entfaltet, so dass sich die freie Länge der Vorrichtung vergrößert hat. Hierbei ist zumindest ein erheblicher Teil des Anzeigeelements aus dem Schutzschlauch herausgetreten und somit sichtbar geworden. Da das Anzeigeelement 16 eine andere Farbe als das Gurtband 10 aufweist, insbesondere eine Signalfarbe wie rot, gelb oder orange, ist das Anzeigeelement 16 nun aus größerer Entfernung, zumindest vom Boden am Baumstandort aus, sichtbar.

Grundsätzlich ist die dargestellte Vorrichtung auch für eine Überlastanzeige bei anderen Anwendungsgebieten als der Baumkronensicherung geeignet, beispielsweise beim Heben oder Ziehen von Lasten. Die Zugkraft wirkt dann in der Richtung der linear gestreckten Vorrichtung.

Zusammenfassend ist folgendes festzuhalten: Die Erfindung betrifft eine Gurtbandvorrichtung für unter Zugbelastung stehende Anordnungen, insbesondere für Baumkronensicherungssysteme, mit einem Gurtband 10 mit je einer endseitigen Schlaufe 12, 12', die durch Umlegen von Endpartien des Gurtbands 10 und Befestigung der Enden am Gurtband gebildet ist, wobei die Befestigung 14, 14' und das Gurtband 10 einer vorbestimmten Mindestzugkraft widerstehen. Um eine gute Sichtbarkeit des Anzeigeelements auch aus größeren Entfernungen zu gewährleisten, wird gemäß der Erfindung vorgeschlagen, dass das Gurtband 10 in der Nähe mindestens einer der Schlaufen 12 von einem das Gurtband 10 verkürzenden Anzeigeelement 16 übergriffen ist, das mit zwei Endbereichen derart an dem Gurtband 10 befestigt ist, dass eine der Befestigungen 18 bei einer vorbestimmten auf das Gurtband 10 wirkenden Zugkraft nachgibt, die geringer ist als die Mindestzugkraft, der die Schlaufenbefestigung 14, 14' und das Gurtband widerstehen.

## Patentansprüche

1. Gurtbandvorrichtung für unter Zugbelastung stehende Anordnungen, insbesondere für Baumkronensicherungssysteme, mit einem Gurtband (10) mit je einer endseitigen Schlaufe (12, 12'), die durch Umlegen von Endpartien des Gurtbands (10) und Befestigung der Enden am Gurtband gebildet ist, wobei die Befestigung (14, 14') und das Gurtband (10) einer vorbestimmten Mindestzugkraft widerstehen und wobei das Gurtband (10) in der Nähe mindestens einer der Schlaufen (12) von einem Anzeigeelement (16) übergriffen ist, **dadurch gekennzeichnet, dass** das Anzeigelement das Gurtband (10) verkürzend übergreift und mit zwei Endbereichen derart an dem Gurtband (10) befestigt ist, dass eine der Befestigungen (18) bei einer vorbestimmten auf das Gurtband (10) wirkenden Zugkraft nachgibt, die geringer ist als die Mindestzugkraft, der die Schlaufenbefestigung (14, 14') und das Gurtband widerstehen.

2. Gurtbandvorrichtung nach Anspruch 1, **dadurch gekennzeichnet, dass** das Gurtband (10) zwischen den Schlaufen (12, 12') von einem insbesondere auch das Anzeigeelement (16) in seinem beidendig befestigten Zustand überdeckenden, vorzugsweise undurchsichtigen Schutzschlauch lose umgeben ist.

3. Gurtbandvorrichtung nach Anspruch 1 oder 2, **dadurch gekennzeichnet, dass** bei Überschreiten der vorbestimmten Zugkraft die schlaufenferne Befestigung (18) des Anzeigeelements (16) nachgibt.

4. Gurtbandvorrichtung nach einem der Ansprüche 1 bis 3, **dadurch gekennzeichnet, dass** der vom Anzeigeelement (16) übergriffene Bereich (20) des Gurtbands (10) Z-förmig gefaltet ist.

5. Gurtbandvorrichtung nach einem der Ansprüche 2 bis 4, **dadurch gekennzeichnet, dass** das Anzeigeelement (16) den Schutzschlauch nach einem Nachgeben seiner Befestigung (18) durch eine Zugkraftüberschreitung zumindest teilweise überragt.

6. Gurtbandvorrichtung nach einem der Ansprüche 1 bis 5, **dadurch gekennzeichnet, dass** das Gurtband (10) aus einem Kunststoffmaterial, vorzugsweise aus einem Polyester-, Polyamid- oder Polyethylengewebe besteht.

7. Gurtbandvorrichtung nach einem der Ansprüche 1 bis 6, **dadurch gekennzeichnet, dass** das Anzeigeelement (16) aus einem Kunststoffmaterial, vorzugsweise aus einem Polyester-, Polyamid- oder Polyethylengewebe besteht.

8. Gurtbandvorrichtung nach einem der Ansprüche 1 bis 7, **dadurch gekennzeichnet, dass** das Gurtband (10) und das Anzeigeelement (16) unterschiedliche Farben aufweisen.

9. Gurtbandvorrichtung nach einem der Ansprüche 1 bis 8, **dadurch gekennzeichnet, dass** das Anzeigeelement (16) eine Signalfarbe, insbesondere gelb, orange oder rot aufweist.

10. Gurtbandvorrichtung nach einem der Ansprüche 1 bis 9, **dadurch gekennzeichnet, dass** die Befestigung (14, 14') der die Schlaufe (12, 12') bildenden Endpartie des Gurtbands (10) durch eine Naht gebildet ist.

11. Gurtbandvorrichtung nach einem der Ansprüche 7 bis 9, **dadurch gekennzeichnet, dass** die Befestigung der die Schlaufe (12, 12') bildenden Endpartie des Gurtbands (10) durch Kunststoffschweißen, durch Kleben oder durch Nieten gebildet ist.

12. Gurtbandvorrichtung nach einem der Ansprüche 1 bis 11, **dadurch gekennzeichnet, dass** die Befestigung (18, 18') der Endbereiche des Anzeigeelements (16) an dem Gurtband (10) jeweils durch eine Naht gebildet ist.

13. Gurtbandvorrichtung nach einem der Ansprüche 8 bis 11, **dadurch gekennzeichnet, dass** die Befestigung der Endbereiche des Anzeigeelements (16) an dem Gurtband (10) durch Kunststoffschweißen, durch Kleben oder durch Nieten gebildet ist.

14. Gurtbandvorrichtung nach einem der Ansprüche 1 bis 13, **dadurch gekennzeichnet, dass** die Zugkraft, die zu einem Nachgeben der Befestigung (18) des Endbereichs des Anzeigeelements (16) an dem Gurtband (10) führt, im Bereich von 5 kN bis 100 kN liegt.

15. Zugvorrichtung mit Überlastanzeige, mit einem als Kette, Seil oder Gurtband ausgebildeten Zugorgan (10), an dessen Enden eine Zugkraft wirkt, und mit mindestens einem eine eine vorbestimmte Zugkraft überschreitende Zugkraft optisch signalisierenden, mit zwei Endpartien an dem Zugorgan befestigten Anzeigeelement (16), **dadurch gekennzeichnet, dass** das Zugorgan (10) von einem zumindest das Anzeigeelement (16) überdeckenden, undurchsichtigen Schlauchkörper umgeben ist und dass das Anzeigeelement (16) das Zugorgan unter Bildung einer das Zugorgan verkürzenden Schlaufenpartie (20) in Längsrichtung übergreift, wobei eine der Befestigungen (18) des Anzeigeelements (16) an dem Zugorgan (10) bei einem Überschreiten der vorbestimmten Zugkraft nachgibt und zumindest ein Teil des Anzeigeelements (16) von der Schlaufenpartie (20) des Zugorgans (10) aus der Überdeckung durch den Schlauchkörper herausgezogen wird.

## Claims

1. Belt band device for arrangements subject to tensile load, in particular for tree-crown security systems, comprising a belt band (10) having at each end a loop (12, 12'), which is formed by folding over end portions of the belt band (10) and fastening the ends to the belt band, wherein the fastening (14, 14') and the belt band (10) are able to withstand a predetermined tensile force and wherein the belt band (10) in the vicinity of at least one of the loops (12, 12') is overlapped by an indicating element (16), **characterized in that** the indicating element (16) overlaps and shortens the belt band (10) and is fastened by two end regions in such a way to the belt band (10) that one of the fastenings (18) gives way if the belt band (10) is acted upon by a predetermined tensile force, which is lower than the minimum tensile force that the loop fastening (14, 14') and the belt band (10) are able to withstand.

2. Belt band device according to claim 1, **characterized in that** the belt band (10) between the loops (12, 12') is loosely surrounded by a preferably opaque protective tube, by which in particular the indicating element (16) is also covered in its state of being fastened at both ends.

3. Belt band device according to claim 1 or 2, **characterized in that**, if the predetermined tensile force is exceeded, the loop-remote fastening (18) of the indicating element (16) gives way.

4. Belt band device according to one of claims 1 to 3, **characterized in that** the region (20) of the belt band (10) that is overlapped by the indicating element (16) is folded into a Z-shape.

5. Belt band device according to one of claims 2 to 4, **characterized in that** the indicating element (16), after its fastening (18) gives way owing to the exceeding of a tensile force, at least partially projects from the protective tube.

6. Belt band device according to one of claims 1 to 5, **characterized in that** the belt band (10) is made of a plastics material, preferably a polyester-, polyamide- or polyethylene woven fabric.

7. Belt band device according to one of claims 1 to 6, **characterized in that** the indicating element (16) is made of a plastics material, preferably a polyester-, polyamide- or polyethylene woven fabric.

8. Belt band device according to one of claims 1 to 7, **characterized in that** the belt band (10) and the indicating element (16) are of different colours.

9. Belt band device according to one of claims 1 to 8, **characterized in that** the indicating element (16) is of a signal colour, in particular yellow, orange or red.

10. Belt band device according to one of claims 1 to 9, **characterized in that** the fastening (14, 14') of the end portion of the belt band (10) that forms the loop (12, 12') is formed by means of a seam.

11. Belt band device according to one of claims 7 to 9, **characterized in that** the fastening of the end portion of the belt band (10) that forms the loop (12, 12') is formed by plastic welding, gluing or riveting.

12. Belt band device according to one of claims 1 to 11, **characterized in that** the fastening (18, 18') of the end regions of the indicating element (16) to the belt band (10) is formed in each case by means of a seam.

13. Belt band device according to one of claims 8 to 11, **characterized in that** the fastening of the end regions of the indicating element (16) to the belt band (10) is formed by plastic welding, gluing or riveting.

14. Belt band device according to one of claims 1 to 13, **characterized in that** the tensile force that causes the fastening (18) of the end region of the indicating element (16) to the belt band (10) to give way is in the region of 5 kN to 100 kN.

15. Tension device with overload indication, comprising a tension element (10) in the form of a chain, rope or belt band, upon the ends of which a tensile force acts, and comprising at least one indicating element (16), which is fastened by two end portions to the tension element and visually signals a tensile force that exceeds a predetermined tensile force, **characterized in that** the tension element (10) is surrounded by an opaque tubular body, which covers at least the indicating element (16), and that the indicating element (16) overlaps the tension element while simultaneously forming in longitudinal direction a loop portion (20) that shortens the tension element, wherein one of the fastenings (18) of the indicating element (16) to the tension element (10) gives way in the event of an exceeding of the predetermined tensile force and at least part of the indicating element (16) is pulled by the loop portion (20) of the tension element (10) out of the overlap by the tubular body.

## Revendications

1. Dispositif de sanglage pour des agencements soumis à une contrainte de traction, en particulier pour des systèmes de sécurisation de cimes d'arbres, avec une sangle ou un ruban de sangle (10) pourvu à chaque extrémité d'une boucle (12, 12') qui est formée en repliant des parties terminales de la sangle (10) et en fixant les extrémités sur la sangle, la fixation (14, 14') et la sangle (10) résistant à une force de traction minimale prédéterminée, et la sangle (10) étant recouverte par un élément indicateur (16) au voisinage d'au moins une des boucles (12), **caractérisé en ce que** l'élément indicateur recouvre la sangle (10) en la raccourcissant et est fixé par deux régions terminales sur la sangle (10) de telle sorte qu'une des fixations (18) cède lorsqu'agit sur la sangle (10) une force de traction prédéterminée qui est inférieure à la force de traction minimale à laquelle résistent la fixation de boucle (14, 14') et la sangle ou un ruban de sangle (10).

2. Dispositif de sanglage selon la revendication 1, **caractérisé en ce que** la sangle (10) est, entre les boucles (12, 12'), entourée de manière lâche par un tuyau souple de protection de préférence opaque, en particulier recouvrant également l'élément indicateur (16) dans son état fixé aux deux extrémités.

3. Dispositif de sanglage selon la revendication 1 ou 2, **caractérisé en ce que** la fixation (18) de l'élément indicateur (16) qui est éloignée de la boucle cède en cas de dépassement de la force de traction prédéterminée.

4. Dispositif de sanglage selon l'une des revendications 1 à 3, **caractérisé en ce que** la région (20) de la sangle (10) qui est recouverte par l'élément indicateur (16) est repliée en forme de Z.

5. Dispositif de sanglage selon l'une des revendications 2 à 4, **caractérisé en ce que** l'élément indicateur (16) dépasse au moins partiellement du tuyau souple de protection une fois que sa fixation (18) a cédé du fait d'un dépassement de la force de traction.

6. Dispositif de sanglage selon l'une des revendications 1 à 5, **caractérisé en ce que** la sangle (10) est réalisée en matière plastique, de préférence en tissu de polyester, de polyamide ou de polyéthylène.

7. Dispositif de sanglage selon l'une des revendications 1 à 6, **caractérisé en ce que** l'élément indicateur (16) est réalisé en matière plastique, de préférence en tissu de polyester, de polyamide ou de polyéthylène.

8. Dispositif de sanglage selon l'une des revendications 1 à 7, **caractérisé en ce que** la sangle (10) et l'élément indicateur (16) présentent des couleurs différentes.

9. Dispositif de sanglage selon l'une des revendications 1 à 8, **caractérisé en ce que** l'élément indicateur (16) présente une couleur de signalisation, en particulier jaune, orange ou rouge.

10. Dispositif de sanglage selon l'une des revendications 1 à 9, **caractérisé en ce que** la fixation (14, 14') de la partie terminale de la sangle (10) qui forme la boucle (12, 12') est formée par une couture.

11. Dispositif de sanglage selon l'une des revendications 7 à 9, **caractérisé en ce que** la fixation (14, 14') de la partie terminale de la sangle (10) qui forme la boucle (12, 12') est formée par soudage de matière plastique, par collage ou par rivetage.

12. Dispositif de sanglage selon l'une des revendications 1 à 11, **caractérisé en ce que** la fixation (18, 18') des régions terminales de l'élément indicateur (16) sur la sangle (10) est formée à chaque fois par une couture.

13. Dispositif de sanglage selon l'une des revendications 8 à 11, **caractérisé en ce que** la fixation des régions terminales de l'élément indicateur (16) sur la sangle (10) est formée par soudage de matière plastique, par collage ou par rivetage.

14. Dispositif de sanglage selon l'une des revendications 1 à 13, **caractérisé en ce que** la force de traction qui fait céder la fixation (18) de la région terminale de l'élément indicateur (16) sur la sangle (10) se situe dans la plage de 5 kN à 100 kN.

15. Dispositif de traction avec indication de surcharge, avec un organe de traction (10) réalisé sous forme de chaîne, de câble ou de sangle ou ruban de sangle, aux extrémités duquel agit une force de traction, et avec au moins un élément indicateur (16) fixé par deux parties terminales sur l'organe de traction et signalant visuellement une force de traction dépassant une force de traction prédéterminée, **caractérisé en ce que** l'organe de traction (10) est entouré par un corps tubulaire opaque recouvrant au moins l'élément indicateur (16), et **en ce que** l'élément indicateur (16) recouvre l'organe de traction en direction longitudinale en formant une partie en boucle (20) qui raccourcit l'organe de traction, une des fixations (18) de l'élément indicateur (16) sur l'organe de traction (10) cédant en cas de dépassement de la force de traction prédéterminée et au moins une partie de l'élément indicateur (16) étant, par la partie en boucle (20) de l'organe de traction (10), extraite de son recouvrement à travers le corps tubulaire.
